(19) Europäisches Patentamt
European Patent Office
Office européen des brevets

(11) **EP 4 773 075 A1**

(12) **EUROPEAN PATENT APPLICATION**
published in accordance with Art. 153(4) EPC

(43) Date of publication:
**08.07.2026 Bulletin 2026/28**

(21) Application number: **24896000.7**

(22) Date of filing: **08.10.2024**

(51) International Patent Classification (IPC):
*G06T 7/00* (2017.01)

(52) Cooperative Patent Classification (CPC):
**G06T 7/0004**

(86) International application number:
**PCT/CN2024/123313**

(87) International publication number:
**WO 2025/112906 (05.06.2025 Gazette 2025/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.11.2023 CN 202311631619**

(71) Applicant: **Tencent Technology (Shenzhen)
Company Limited
Shenzhen, Guangdong 518057 (CN)**

(72) Inventor: **ZHANG, Jiangning
Shenzhen, Guangdong 518057 (CN)**

(74) Representative: **EP&C
P.O. Box 3241
2280 GE Rijswijk (NL)**

(54) **IMAGE PROCESSING METHOD AND APPARATUS, AND DEVICE, MEDIUM AND PROGRAM PRODUCT**

(57) The present application relates the field of machine learning. Disclosed are an image processing method and apparatus, and a device, a medium and a program product. The method comprises: acquiring a noise-added image corresponding to a first image; performing semantic analysis on the first image, so as to obtain semantic analysis data; performing image denoising processing on the noise-added image on the basis of the semantic analysis data, so as to obtain a second image; and on the basis of the feature similarity between the first image and the second image, determining a defect identification result corresponding to the first image. That is, the semantic analysis data is guided to perform image denoising, so that an image object in the second image after denoising being consistent with an image object in the first image is ensured, and then the defect identification result is determined by means of the feature similarity that is obtained by means of a comparison, so that the accuracy and identification efficiency of image object identification can be improved.

FIG. 2

## Description

The present disclosure claims priority to Chinese Patent Application No. 2023116316198, filed with the China National Intellectual Property Administration on November 29, 2023, and entitled "METHOD AND APPARATUS FOR IMAGE PROCESSING, DEVICE, MEDIUM, AND PROGRAM PRODUCT".

FIELD OF THE TECHNOLOGY

Embodiments of the present disclosure relate to the field of machine learning, and in particular, to image processing.

BACKGROUND OF THE DISCLOSURE

Defect detection is commonly used in an industrial production process. Through detection of an image of a product, a manufacturing defect in the product can be determined.

In related art, defects are generally detected by training a denoising model in advance using normal sample images. Noise is added into a to-be-recognized image of a product, the product image is input into the denoising model for denoising to obtain a denoised reconstructed image, the reconstructed image and the product image are compared to obtain a difference between the two, and the difference is used for recognizing a object having a defect from the product image.

In related art, a denoising error may occur when the noisy product image is denoised using the denoising model. Consequently, objects in the reconstructed image and the product image are inconsistent, and hence the object having the defect cannot be recognized through comparing the reconstructed image and the product image. Recognition accuracy of the objects is thus poor.

SUMMARY

Embodiments of the present disclosure provide a method and an apparatus for image processing, a device, a medium, and a program product. Recognition accuracy of an object in an image is improved. The following provides technical solutions.

In one aspect, a method for image processing is provided according to embodiments of the present disclosure. The method comprises: adding first noise into a first image to obtain a noisy image, wherein the first image displays a first object; extracting, from the first image, a semantic feature describing the first object; denoising the noisy image according to the semantic feature to obtain a second image; and determining a defect-detection result of the first image according to similarity between the first image and the second image, where the defect-detection result indicates whether the first object has a defect or characterizes the defect on the first object.

In another aspect, an apparatus for image processing is provided. The apparatus comprises: an obtaining module, configured for adding first noise into a first image to obtain a noisy image, wherein the first image displays a first object; an analyzing module, configured for extracting, from the first image, a semantic feature describing the first object; a denoising module, configured for denoising the noisy image according to the semantic feature to obtain a second image; and a determining module, configured for determining a defect-detection result of the first image according to similarity between the first image and the second image, where the defect-detection result indicates whether the first object has a defect or characterizes the defect on the first object.

In another aspect, a computer device is provided according to embodiments of the present disclosure. The computer device includes a processor and a memory, the memory stores a computer program, and the computer program, when loaded and executed by the processor, implements the foregoing method.

In another aspect, a storage medium is provided according to embodiments of the present disclosure. The storage medium stores a computer program, and the computer program is configured for implementing the foregoing method.

In another aspect, a computer program product is provided according to embodiments of the present disclosure. The computer program product includes a computer program, and the computer program product, when executed on a computer, causes the computer to perform the foregoing method.

Technical advantages of technical solutions provided in embodiments of the present disclosure are at least as follows.

After the first noise is added to the first image to obtain the noisy image, the semantic feature describing the first object in the first image is extracted from the first image. Accordingly, the noisy image is denoised according to the semantic feature to obtain a second image, and the defect-detection result of the first image is determined according to similarity between the first image and the second image. In other words, the first image is analyzed at a semantic level to obtain the semantic feature, and the semantic feature is utilized to guide the image denoising. The result of the semantic analysis reflects information of the first object in the first image, and hence the first object in the noisy image can be clearly indicated during the image denoising to avoid that a part of the first object is removed as noise. That is, the complete first object can be retained as much as possible in the second image during the denoising. Therefore, when the images are compared to obtain the similarity, the only cause of low similarity is the defect on the first object in the first image, rather than a display error of the first object in the second image due to the denoising. Accuracy and efficiency of recognizing the defects on the first object are thus improved.

BRIEF DESCRIPTION OF THE DRAWINGS

FIG. 1 is a schematic diagram of an implementation environment according to an embodiment of the present disclosure.

FIG. 2 is a flowchart of a method for image processing according to an embodiment of the present disclosure.

FIG. 3 is a flowchart of a method for image processing according to another embodiment of the present disclosure.

FIG. 4 is a schematic diagram of a process of fusing feature maps according to an embodiment of the present disclosure.

FIG. 5 is a flowchart of a method for image processing according to another embodiment of the present disclosure.

FIG. 6 is a flowchart of a process of training a model for image processing according to an embodiment of the present disclosure.

FIG. 7 is a schematic diagram of a process of image processing according to an embodiment of the present disclosure.

FIG. 8 is a schematic diagram of an effect of image processing according to an embodiment of the present disclosure.

FIG. 9 is a structural block diagram of an apparatus for image processing according to an embodiment of the present disclosure.

FIG. 10 is a structural block diagram of an apparatus for image processing according to another embodiment of the present disclosure.

FIG. 11 is a structural block diagram of a computer device according to an embodiment of the present disclosure.

DESCRIPTION OF EMBODIMENTS

To make objectives, technical solutions, and advantages of the present disclosure clearer, the following further describes implementations of the present disclosure in detail with reference to the accompanying drawings. Clearly, the described embodiments are a part of embodiments of the present disclosure rather than all of the embodiments. Based on embodiments of the present disclosure, all other embodiments obtained by an ordinary person skilled in the art without making any creative work fall within a scope of protection of the present disclosure.
In the present disclosure, terms such as "first" and "second" are used to distinguish the same items or similar items having the basically same function. Terms "first" and "second" have no logical or time sequence dependency relationship, and do not limit a quantity or a performing sequence.

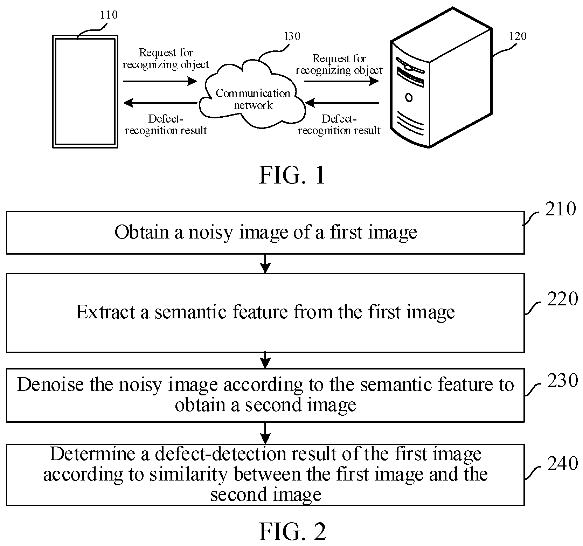

FIG. 1 is a schematic diagram of an implementation environment according to an embodiment of the present disclosure. As shown in FIG. 1, the implementation environment includes a terminal 110, a server 120, and a communication network 130. The terminal 110 is connected to the server 120 through the communication network 130. In embodiments of the present disclosure including the embodiments of both the claims and the specification (hereinafter referred to as "all embodiments of the present disclosure"), the communication network 130 may be a wired network or may be a wireless network, which is not limited herein.
In all embodiments of the present disclosure, the terminal 110 may be configured to transmit data to the server 120. In all embodiments of the present disclosure, the terminal 110 may have a target application program having an image recognition function installed therein. The present disclosure is not limited thereto. For example, the target application

3

program may be a conventional application program, may be a cloud application program, may be implemented as a mini program or an application module in a host application program, or may be a web platform. The present disclosure is not limited thereto.

After receiving a first image, the terminal 110 may generate a request for object recognition and transmits the request for object recognition to the server 120. The request for object recognition is configured for requesting to recognize a first object in the first image.

After receiving the request for object recognition, the server 120 adds first noise into the first image to obtain a noisy image and extracts a semantic feature from the first image. The server 120 denoises the noisy image according to the semantic feature to obtain a second image and determines a defect-detection result of the first image according to similarity between the first image and the second image. The server 120 may feed the defect-detection result back to the terminal 110 for display.

Descriptions are provided in the foregoing by using an example in which the terminal 110 and the server 120 serve as a computer device. Here the computer device refers to an execution body for performing embodiments of the present disclosure. In all embodiments of the present disclosure, when the computer device may be the terminal 110. The terminal 110 may be a smartphone, a tablet computer, a notebook computer, a desktop computer, an intelligent appliance, an intelligent in-vehicle terminal, an intelligent sound box, an intelligent voice interaction device, an aircraft, or the like, but it is not limited thereto.

When the computer device is the server 120, the server 120 may be an independent physical server, a server cluster or a distributed system including a plurality of physical servers, or a cloud server providing a basic cloud computing service such as a cloud service, a cloud database, cloud computing, a cloud function, cloud storage, a network service, cloud communication, a middleware service, a domain name service, a security service, a content delivery network (CDN), big data, or an artificial intelligence platform.

Cloud technology refers to hosting technology implementing computing, storage, processing, and sharing of data by unifying a series of resources such as hardware, software, and a network in a wide area network or a local area network. Cloud technology is a collective name of network technology, information technology, integration technology, management platform technology, application technology, and the like based on application of a cloud computing business model. Cloud technology can constitute a resource pool, which can be used on demand flexibly and conveniently. Cloud computing technology becomes significant support. A background service of a technical network system, such as a video website, an image website, or more portal websites, needs a large number of computing resources and storage resources. With rapid development and application of the Internet industry, each object may have its own recognition mark in the future and needs to be transmitted to a background system for logical processing. Data of different levels is processed separately, and data of various industries needs strong system support, which can be implemented only by cloud computing. In all embodiments of the present disclosure, the server 120 may alternatively be implemented as a node in a blockchain system.

Information (including, but not limited to, user equipment information, user personal information, and the like), data (including, but not limited to, data for analysis, stored data, displayed data, and the like), and a signal involved in the present disclosure are authorized by a user or are sufficiently authorized by all parties, and related data needs to be collected, used, and processed by complying with related laws and regulations and standards of related regions,

Herein reference may be made to the foregoing descriptions and the foregoing implementation environment. FIG. 2 is a flowchart of a method for image processing according to an embodiment of the present disclosure. The method may be executed by a computer device. The computer device, for example, may be the foregoing terminal, the server, or both the terminal and the server. Hereinafter embodiments of the present disclosure are described by using an example in which the method is performed by the server. The method includes the following operations.

Operation 210: Obtain a noisy image of a first image.

The noisy image is obtained by adding first noise into the first image displaying a first object. In practical image processing, the noisy image may be embodied as a "noisy" representation which is obtained by adding first noise into a representation of the first image.

For example, the first image is an image displaying at least one first object.

In all embodiments of the present disclosure, the first image may be an RGB (red-green-blue) image. Alternatively, the first image may be a grayscale image.

In all embodiments of the present disclosure, the first object in the first image may be a target on which defect recognition is to be performed. The defect recognition refers to a process of detecting whether a defect exists in the first object. For example, when the first object in the first image is a screw, it is detected whether a defect exists on a screw head.

In all embodiments of the present disclosure, the first image and the first object in the first image are two-dimensional, or they are three-dimensional.

In all embodiments of the present disclosure, the noise may refer to data configured for disturbing content of an image. For example, the noise is configured to blur or distort the image, or introduce random variations in brightness or color to the image.

In all embodiments of the present disclosure, the noise may comprise salt pepper noise (black and white pixels randomly appearing in the image), Gaussian noise (a pixel value of the image is affected by normally distributed random noise), an analog signal noise (a noise introduced due to interference such as a noise of an electronic element in a transmission and collection process of the image), a compression noise (a noise introduced in a compression process of the image), a blur noise (a noise corresponding to image blur caused by a factor such as a vibration, a motion, or an optical factor in a photographing or transmission process of the image), a color noise (a noise due to a difference between different color channels in the RGB image, for example, a chromatic aberration), or an environment noise (noise generated from the environment in the image, for example, due to an illumination change, a shadow, or reflection.

In all embodiments of the present disclosure, the first noise may be obtained through at least one of the following manners.

First, a set of noise is obtained, and at least one noise is selected randomly from the set as the first noise.

Second, noise in the first image is analyzed. If there is noise in the first image, the noise is extracted and then copied, and the copi(es) of the noise serve as the first noise. For example, the first image includes 10 pixels, and pixel 2 is subject to the Gaussian noise. In this case, the Gaussian noise serves as the first noise and is introduced to other pixels separately to change the pixel values of these pixels.

The foregoing manners of obtaining the first noise are merely examples, which is not limited in this embodiment of the present disclosure.

In all embodiments of the present disclosure, the first noise may comprise noise of at least one type. When a plurality of types of noise is included, the plurality of types of noise is noise of the same noise type or noise of different noise types.

Hereinafter a process of adding the first noise into the first image is also called image noise-adding processing.

In all embodiments of the present disclosure, the image noise-adding processing may be performed once or a plurality of times (iterations). When the image noise-adding processing is performed for a plurality of times, a result of adding the first noise in a previous iteration serves as data on which noise is to be added in a current iteration. For example, the first noise is added into image A to obtain noisy image 1 in the 1st iteration of image noise-adding processing. The first noise is added into noisy image 1 to obtain noisy image 2 in the 2nd iteration of image noise-adding processing. The remaining processing till the end of image noise-adding processing can be deduced by analogy. The noisy image obtained through the last noise-adding processing serves as the noisy image of the first image.

The noise applied to different iterations of the image noise-adding processing may be the same or different, which is not limited herein.

As an example, a quantity of iterations is predetermined, and the noise adding processing is performed on the first image for the iteration(s) of the determined quantity.

Operation 220: Extract a semantic feature from the first image.

The semantic feature is configured for describing the first object.

In all embodiments of the present disclosure, the semantic feature may be a feature vector that describes the first object through at least one of the following information: orientation, a position, a posture, or a category of the first object.

The orientation refers to a direction with which the first object is aligned in the first image. For example, the first object in the first image includes a screw, and a screw head of the screw is oriented to a left side of the first image.

The position refers to a location of the first object in the first image. For example, the first object in the first image includes a gear, and the gear is located in an upper-left area of the first image.

The posture is posture angle(s) of the first object in the first image. For example, the first object in the first image includes a gear, a lower edge line of the first image is defined as a horizontal line, and the gear is displayed in the first image at an angle of 45 degrees anticlockwise with respect to the horizontal line.

The category refers to a classification of the first object. For example, the first object in image A includes a gear, and the first object in image B includes a nut. Since the gear and the nut belong to workpieces having different functions, categories of the gear and the nut are different.

As an example, the semantic feature is obtained through at least one of the following manners.

First, a semantic analysis model is trained in advance, and the first image is input into the semantic analysis model to obtain the semantic feature for the first image.

Second, a value of each pixel in the first image is obtained and compared with a preset pixel-value threshold, the pixel(s) of which the value reaches the pixel-value threshold serves as pixel(s) of the first object in the first image, and hence distribution of the pixel(s) of the first object in the first image is obtained. The position of the first object in the first image may be represented by the pixel distribution. Moreover, a contour of the first object may be obtained from the pixel distribution for determining the category, the direction, and the posture of the first object.

The foregoing manners of semantic analysis are merely examples, and the present disclosure is not limited thereto.

In the foregoing situation in which the semantic analysis model is obtained through training, In all embodiments of the present disclosure, the semantic analysis model may include a model of at least one of the following types: a word vector model, a bag-of-words model, a document vector model, a recurrent neural network (RNN) model (for example, a long short-term memory network or a gated recurrent unit), a convolutional neural network (CNN) model, an attention mechanism model (for example, a transformer model), and a pre-trained language model (for example, a BERT model).

In all embodiments of the present disclosure, the semantic feature may refer to a feature indicating the information of a single first object or the information of a plurality of first objects.

Operation 230: Denoise the noisy image according to the semantic feature to obtain a second image.

Herein denoising refers to a process of suppressing or eliminating noise in the noisy image, and this process may be also called image denoising processing.

In all embodiments of the present disclosure, the image denoising processing may be performed through at least one of the following manners.

Mean filtering. The value of each pixel in the image is replaced with an average value of pixels around the pixel.

Median filtering. The value of each pixel in the image is replaced with a median value of pixels around the pixel.

Gaussian filtering. The image is blurred using a Gaussian function.

Wavelet transform. The image is converted into a wavelet domain, and the noise is removed using a threshold represented by a wavelet coefficient.

Total variation denoising. The image is optimized through a total variation regularization model, where the noise is reduced by minimizing a total variation of the image.

Non-local mean denoising. The noise is estimated by using non-local similarity in the image for denoising.

Deep-learning method. A neural network model is trained for learning the noise and denoising.

The foregoing manners are merely examples, and the present disclosure is not limited thereto.

Here the second image is an image generated by performing the image denoising processing on the noisy image.

Here the first image may be the same as the second image, or the first image is different from the second image.

For example, when the first image is an image in which the first object has a defect, the second image is an image in which the first object has no defect.

Here the image denoising processing is performed on the noisy image under the guidance of the semantic feature, and a complete first object in the first image can be retained in the second image. Further, when the first object in the first image has the defect, after the noise-adding and the denoising processing, the defect can be repaired in the second image. In addition, under the guidance of the semantic feature, the general features, such as the category, the orientation, or the position of the first object, in the second image are not different from those of the first object in the first image. In this way, during similarity computation in operation 240, only the defect of the first object in the first image serves as a cause of low similarity, thereby effectively improving accuracy of recognizing the defect part.

Operation 240: Determine a defect-detection result of the first image according to similarity between the first image and the second image.

The defect-detection result indicates a defect condition of the first object, e.g., it indicates whether the first object has a defect or characterizes the defect on the first object.

As an example, a feature of the first image and a feature of the second image are compared to determine the similarity between the first image and the second image. After the denoising, the second image is an image having no defect. Hence, higher similarity indicates higher possibility that the first object in the first image has no defect. Otherwise, if the similarity is lower than a preset similarity threshold, the first object in the first image is determined to have the defect part.

In all embodiments of the present disclosure, a first representation may be extracted from the first image, a second representation is extracted from the second image, and similarity between the first representation and the second representation is calculated to determine the defect condition of the first object in the first image.

In all embodiments of the present disclosure, a manner of calculating the similarity may comprise calculating at least one of: a Euclidean distance, a cosine similarity, a correlation coefficient (calculating a correlation coefficient between two representations is dividing an covariance of the two representations by a product of standard deviations of the two feature representations, where a value range of the correlation coefficient is [-1, 1], and a value closer to 1 represents higher similarity), a Hamming distance, or a Pearson correlation coefficient (which is configured for measuring a linear relationship between two representations and is calculated by dividing a covariance of two feature vectors by a product of standard deviations of the two feature vectors).

In all embodiments of the present disclosure, the defect condition may comprise a position of the defect on the first object in the first image and a category (for example, a dent, a crack, or a flaw) of the defect.

In all embodiments of the present disclosure, the defect condition may be represented by a set of coordinates and a value. The set of coordinates are configured for indicating a set of points displaying the defect in the image, and the value is configured for indicating the category of the defect, where different defect categories are represented by different values. Alternatively, the defect condition may be represented by a score graph, where the score graph is an image of which a dimension in pixels is the same as that of the first image and pixel values range from 0 to 1. A pixel having a value of 0 indicates that a value of the collocated pixel in the first image and a value of the collocated pixel in the second image are the same, a pixel having a value of 1 indicates that a value of the collocated pixel in the first image and a value of the collocated pixel in the second image are quite different. The position(s) of the pixel(s) having a value of 1 are regarded as a position of the defect.

Hence, in the method provided herein, after the first noise is added to the first image to obtain the noisy image, the semantic feature describing the first object in the first image is extracted from the first image. Accordingly, the noisy image is denoised according to the semantic feature to obtain a second image, and the defect-detection result of the first image is determined according to similarity between the first image and the second image. In other words, the first image is analyzed at a semantic level to obtain the semantic feature, and the semantic feature is utilized to guide the image denoising. The result of the semantic analysis reflects information of the first object in the first image, and hence the first object in the noisy image can be clearly indicated during the image denoising to avoid that a part of the first object is removed as noise. That is, the complete first object can be retained as much as possible in the second image during the denoising. Therefore, when the images are compared to obtain the similarity, the only cause of low similarity is the defect on the first object in the first image, rather than a display error of the first object in the second image due to the denoising. Accuracy and efficiency of recognizing the defects on the first object are thus improved.

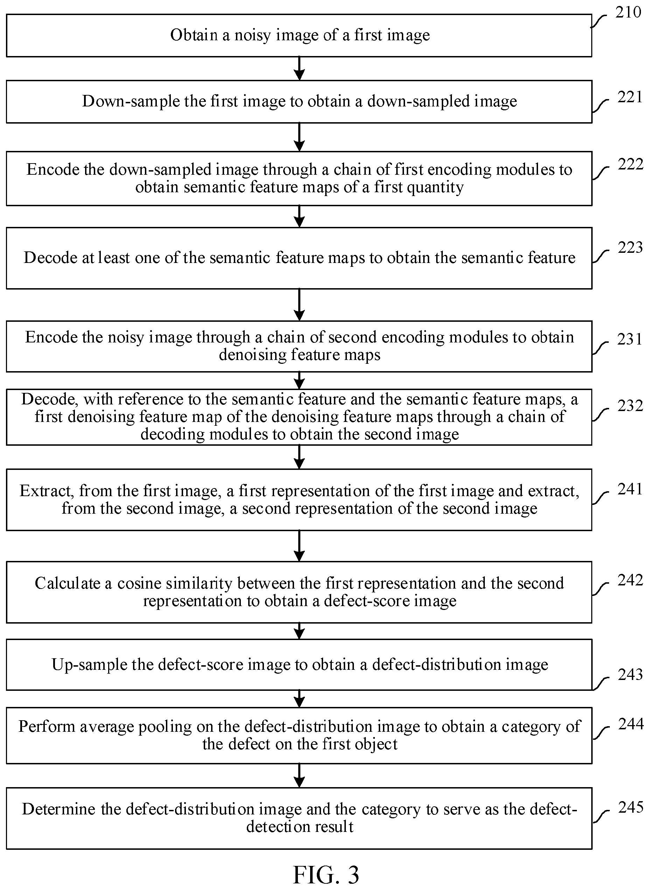

In all embodiments of the present disclosure, the semantic analysis may comprise encoding and decoding. For example, reference is made to FIG. 3, which is a flowchart of a method for image processing according to an embodiment of the present disclosure. Operation 220 may include operation 221 to operation 223. Alternately or additionally, operation 230 may include operation 231 and operation 232. For example, as shown in FIG. 3, the method includes the following operations.

Operation 221: Down-sample the first image to obtain a down-sampled image.

For example, the down-sampling refers to reducing a resolution or a dimension of the image.

Here the first image may be represented by $x_0 \in \mathbb{R}^{H \times W \times 3}$, where 3 represents three channels, H represents a height, and W represents a width.

Operation 222: Encode the down-sampled image through a chain of first encoding modules to obtain semantic feature maps of a first quantity.

Respective dimensions of the semantic feature maps are different from each other. For each positive integer i smaller than the first quantity, an $i^{th}$ semantic feature map is encoded through a respective one of the first encoding modules to obtain an $(i+1)^{th}$ semantic feature map.

For example, the encoding is configured for extracting key information in an image.

Here the encoding is performed as follows: a first encoding module encodes the down-sampled image to obtain a semantic feature map, and the semantic feature maps serves as an input of the next encoding module in the chain. Similarly, the encoding is performed iteratively by the encoding modules in the chain and is also called iterative feature encoding processing.

For example, as the quantity of the iterations increases, the dimension of the semantic feature map gradually decreases. For example, a dimension of the $1^{st}$ semantic feature map obtained through the $1^{st}$ encoding module in the chain is 32×32, a dimension of the $2^{st}$ semantic feature map obtained through the $2^{st}$ encoding module encoding the $1^{st}$ semantic feature map is 16×16, and so on, until the last encoding module outputs the last semantic feature map. The dimension of the last semantic feature map is the smallest among the semantic feature maps.

Hereinafter it is taken as an example that there are four encoding modules in the chain, i.e., there are four iterations.

In all embodiments of the present disclosure, after being obtained, the last semantic feature map may be stored into a semantic data memory.

Operation 223: Decode at least one of the semantic feature maps to obtain the semantic feature.

For example, the decoding refers to a process of restoring (purported) original data from a result of the above encoding.

After the semantic feature maps are obtained through the encoding, iterative feature decoding processing may be performed on the at least one of the semantic feature maps to obtain at least one piece of decoded data.

The foregoing semantic analysis comprises the encoding-decoding processing on the first image. The obtained semantic feature map comprises clear semantic information. The semantic feature map(s) having dimension(s) suitable for representing a required semantic feature of the first object may be selected, such that the final semantic feature is more accurate.

In all embodiments of the present disclosure, operation 223 may comprise the following operation. At least two of the semantic feature maps are fused to obtain a first fused representation. The first fused representation is decoded to obtain the semantic feature.

For example, after the semantic feature maps are obtained, feature fusion is performed on at least two of the semantic feature maps to obtain the first fused representation.

In all embodiments of the present disclosure, the at least two semantic feature maps may be at least two semantic feature maps obtained from adjacent encoding modules in the chain of encoding modules. Alternatively, the at least two semantic feature maps are obtained from non-adjacent encoding modules.

In all embodiments of the present disclosure, the at least two semantic feature maps may comprise the $n^{th}$ semantic feature map and the $m^{th}$ semantic feature map, the $n^{th}$ semantic feature map comprises k first semantic layers, the $m^{th}$ semantic feature map comprises k second semantic layers, and n, m, and k are positive integers. The fusion may comprise following operations. Convolution is performed on the k second semantic layers to obtain k convolution results, respectively. The k convolution results and each first semantic layer (e.g., the $j^{th}$ first semantic layer, $0 < j \leq k$, and j being an integer) of the k first semantic layers are fused (e.g., concatenated) to obtain a respective layer (e.g., the $j^{th}$ layer) of the first fused representation. The k layers of the first fused representation are combined (e.g., stacked or concatenated) to obtain the first fused representation.

A single semantic feature map comprises layers of semantic data (i.e., semantic layers). The feature fusion may be performed using semantic layers of the at least two semantic feature maps to obtain the first fused representation.

As an example, the at least two semantic feature maps are the $3^{rd}$ semantic feature map and the $4^{th}$ semantic feature map. That is, n = 3 and m = 4.

In this example, the third semantic feature map includes three first semantic layers, and the fourth semantic feature map includes three second semantic layers, that is, k = 3.

When the third semantic feature map and the fourth semantic feature map are fused, the convolution is performed on the three second semantic layers in the $4^{th}$ semantic feature map to obtain three respective convolution result of the three second semantic layers.

After the three convolution results are obtained, a first convolution result and the $3^{rd}$ semantic feature map are concatenated to obtain the first version of first fused representation, a second convolution result and the first layer of the first fused representation are concatenated to obtain the second version of the first fused representation, and so on, until the last (third) version of the first fused representation is obtained to complete the feature fusion. The three layers of the first fused representations are included in the last version of the first fused representation, and each layer is denoted as

$$Q_i = \mathcal{P}_i + \sum_{j=1}^{J} \mathcal{F}(\mathcal{H}_j)$$ . J = 3 indicates that the three semantic layers of the $4^{th}$ semantic feature map are used, $\mathcal{P}_i$ represents a low-level output feature map (for example, a corresponding sematic layer) in the $3^{rd}$ semantic feature map, $\mathcal{F}(\mathcal{H}_j)$ represents a high-level output feature map (for example, a convolution result) in the $4^{th}$ semantic feature map, and $\mathcal{F}$ represents a convolution module including a $3\times3$ convolution layer, a normalization layer, and an activation layer.

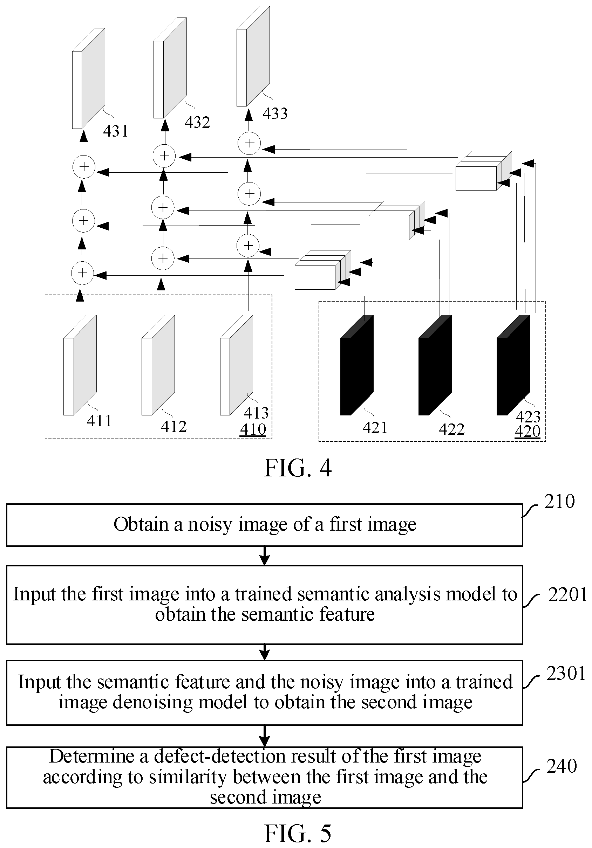

Reference is made to FIG. 4, which is a schematic diagram of a feature fusion process according to an embodiment of the present disclosure. As shown in FIG. 4, the $3^{rd}$ semantic feature map 410 and the $4^{th}$ semantic feature map 420 are fused. The $1^{st}$ second semantic layer 421 in the fourth semantic feature map 420 is taken as an example. Convolution is performed on the $1^{st}$ second semantic layer 421 in the $4^{th}$ semantic feature map 420 to obtain a convolution result. The convolution result and the $1^{st}$ first semantic layer 411 are concatenated to obtain a first fusion result. Another convolution result, which is obtained by performing convolution on the $2^{nd}$ second semantic layer 422, and the first fusion result are concatenated to obtain a second fusion result. The Another convolution result, which is obtained by performing the convolution on the $3^{rd}$ second semantic layer 423, and the second fusion result are concatenated to obtain the $1^{st}$ layer 431 of the first fused representation. Other layers 432 and 433 of the first fused presentation are obtained in a similar manner. That is, each of the $1^{st}$ layer 431, the $2^{nd}$ layer, and the $3^{rd}$ layer of the first fused representation 433 is obtained from the three second semantic layers independently, and these three layers are combined to obtain the first fused representation.

Since different semantic feature maps have different dimensions, fusing of the semantic feature maps into the first fused representation is capable of combining characteristics of the first object under different detail levels. The first fused representation can thus have more useful information, thereby improving an expression capability and accuracy of the semantic feature for the first object.

In all embodiments of the present disclosure, semantic segmentation may be performed on one (hereinafter called a first semantic feature map) of the semantic feature maps to obtain a first semantic-segmentation feature map, where the first semantic-segmentation feature map indicates categories of pixels in the first image.

Here the semantic segmentation may refer to a process of categorizing pixels in an image.

For example, after the four semantic feature maps are obtained, the $4^{th}$ semantic feature map is input into a trained first semantic segmentation model obtained to obtain the first semantic-segmentation feature map, and each element in the first semantic-segmentation feature map indicates a category of the collocated pixel(s) in the first image. For example, it indicates that pixel A and pixel B belong to object 1 in the first image, and pixels C, D and E belong to object 2 in the first image.

In all embodiments of the present disclosure, the first semantic segmentation model may be a spatial gridding module (SGM) having three layers: a layer of ResnetBlock, a layer of Spatial Transformer and another layer of Resnet-Block. The ResnetBlock is a basic construction unit in a residual network and is configured to learn an image feature. The ResnetBlock comprises two convolution layers and a residual connection. The spatial transformer is a module configured to learn image geometrical transformation. The Spatial Transformer is configured to learn geometrical transformation, such as translation, rotation, and zooming, on the input image, such that the network is robust to the geometrical transformation of an image.

In all embodiments of the present disclosure, operation 230 may comprise the following operations:
Operation 231: Encode the noisy image through a chain of second encoding modules to obtain denoising feature maps.

Here a process of performing the image denoising processing on the noisy image may also comprise encoding and decoding.

It is taken as an example that the encoding is similar to the above iterative feature encoding process in semantic analysis and has four iterations. First, the noisy image is encoded through the 1st second encoding module in the chain to obtain the 1st denoising feature map. Second, the 1st denoising feature map is encoded through the 2nd encoding module in the chain to obtain the 2nd denoising feature map. Then, the 2nd denoising feature map is encoded through the 3rd encoding module in the chain to obtain the 3rd denoising feature map. Finally, the 3rd denoising feature map is encoded to obtain the 4th denoising feature map.

In all embodiments of the present disclosure, one of the denoising feature maps (hereinafter assumed to be the $q^{th}$ denoising feature map and also called a second denoising feature map) and the down-sampled image may be fused to obtain a second fused representation. The second fused representation is encoded through the chain of first encoding modules to obtain the semantic feature maps of the first quantity. In the chain of second encoding modules, the second encoding module outputting the following first denoising feature map (hereinafter assumed to be the $p^{th}$ denoising feature map) is located downstream the second encoding module outputting the second denoising feature map (i.e., $q < p$).

In some embodiments, after the feature encoding processing is performed on the noisy image to obtain the 1st denoising feature map, the 1st denoising feature map and the down-sampled image of the first image are fused to obtain the second fused representation. In the semantic analysis, the second fused representation is subject to the iterative feature encoding processing to obtain the semantic feature maps.

Operation 232: Decode, with reference to the semantic feature and the semantic feature maps, a first denoising feature map (e.g., the foregoing $p^{th}$ denoising feature map) of the denoising feature maps through a chain of decoding modules to obtain the second image.

As example, after the $p^{th}$ denoising feature map is obtained, iterative feature decoding processing is performed on the $p^{th}$ denoising feature map with reference to the semantic feature map(s) and/or the semantic feature (e.g., both are inputted into the decoding module that decodes the $p^{th}$ denoising feature map, such that a result of the decoding refers to information in the semantic feature map(s) and/or the semantic feature), which are obtained previously, to obtain the denoising feature maps. After the iterative feature decoding processing is performed on the denoised feature decoded data, the second image is finally obtained.

As an example, after the last denoising feature map is obtained, the last denoising feature map and the 4th semantic feature map are stored together to obtain fused data. The fused data and the semantic feature are input into the 1st decoding module in the chain to obtain the 1st denoising decoding result. The 1st denoising decoding result, the semantic feature, and the fourth denoising feature map, and the first piece of denoised feature decoded data are input into the 2nd decoding module in the chain to obtain the 2nd denoising decoding result. The remaining iterative image decoding processing can be deduced by analogy, and the second image is obtained at the output of the last decoding module.

In all embodiments of the present disclosure, the first denoising feature map (i.e., the foregoing $p^{th}$ denoising feature map) of the denoising feature maps may be decoded with reference to the semantic feature and the semantic feature maps through the chain of decoding modules to obtain second noise indicating a prediction of the first noise. The second noise is removed from a representation of the noisy image to obtain a denoised representation. The denoised representation is decoded to obtain the second image.

In all embodiments of the present disclosure, the semantic segmentation may be performed on the first denoising feature map (i.e., the foregoing $p^{th}$ denoising feature map) to obtain a second semantic-segmentation feature map, where the second semantic-segmentation feature map indicates categories of pixels in the noisy image. The first semantic-segmentation feature map and the second semantic-segmentation feature map are concatenated to obtain a concatenated feature. The first denoising feature map is decoded with reference to the semantic feature and the concatenated feature through the chain of decoding modules to obtain the second noise.

As an example, p is equal to 4. After the 4th denoising feature map is obtained, the 4th denoising feature map is input into the trained second semantic segmentation model to obtain the second semantic-segmentation feature map. The second semantic-segmentation feature map is configured for indicating a category of each pixel in the noisy image. A model structure of the second semantic segmentation model is the same as a model structure of the first semantic segmentation model. In other words, the second semantic segmentation model may be the spatial gridding module (SGM) which also includes the layer of ResnetBlock, the layer of Spatial Transformer, and the other layer of ResnetBlock.

Herein after the second semantic-segmentation feature map is obtained, the feature concatenation is performed on the first semantic-segmentation feature map and the second semantic-segmentation feature map to obtain the concatenated feature.

Afterwards, the iterative feature decoding processing is performed on the 4ʰ denoising feature map with reference to the semantic feature and the second semantic-segmentation feature map to obtain the second noise.

As an example, the iterative feature decoding processing has four iterations. After the iterative feature decoding processing is performed on the 4th denoising feature map through the chain having four decoding modules, the second noise $\varepsilon_\theta$ is obtained, and the second noise $\varepsilon_\theta$ is removed from (the representation of) the noisy image to obtain the denoised representation $\hat{z}$.

Here the first noise may be the same as or different from the second noise.

In all embodiments of the present disclosure, the second noise may be removed from (the representation of) the noisy image by using a preset equation to obtain the denoised representation. The equation is, for example, $p_\theta(x_0|x_{t-1})$, where $x_0$ represents (a representation of) the first image, and $x_{t-1}$ represents (a representation of) an intermediate noisy image obtained after the (t-1)th iteration of the iterative image noise-adding processing.

In all embodiments of the present disclosure, after the denoised representation is obtained, the denoised representation may be input into a trained image decoder to obtain the second image. The second image may be denoted as $\hat{x}_0$.

During denoising of the noisy image, the semantic feature serves as a guide for image denoising, so that the description on the first object is considered during the denoising. Incorrectly denoising, i.e., recognizing a part of the first object as noise, can be avoided, thereby improving precision of image denoising.

In all embodiments of the present disclosure, operation 240 may comprise the following operations.

Operation 241: Extract, from the first image, a first representation of the first image and extract, from the second image, a second representation of the second image.

For example, the foregoing defect condition of the first object includes a position of the defect and a category of the defect.

For example, the first image and the second image are both input into a trained feature extraction model (mapped to a value feature space) to extract the first representation and the second representation.

In all embodiments of the present disclosure, the first representation may comprise feature representations having different dimensions (e.g., for different details levels), and the second representation also includes feature representations having different dimensions. The dimensions for the first representation are the same as those for the second representation.

In all embodiments of the present disclosure, the trained feature extraction model may be a convolution neural network resnet50.

Operation 242: Calculate a cosine similarity between the first representation and the second representation to obtain a defect-score image.

The defect-score image indicates a difference between the first image and the second image in pixel value.

In all embodiments of the present disclosure, defect scores may be calculated for different dimensions of the first representation and the second representation using a cosine similarity equation and then form the defect-score image. The cosine similarity formula may be as follows.

$$\mathcal{M}^n(x_0, \widehat{x_0}) = 1 - \frac{\left(\Psi^n(x_0,\widehat{x_0})\right)^T \cdot \Psi^n(x_0,\widehat{x_0})}{\|\Psi^n(x_0,\widehat{x_0})\|\|\Psi^n(x_0,\widehat{x_0})\|} \qquad \text{Equation (1)}$$

In equation (1), n represents a representation of an nth dimension among the different dimensions.

As an example, the defect-score image is a grayscale image of the same size as the first image, and values of the pixels in the defect-score image range from 0 to 1 to indicate a degree of the difference between collocated pixels. The value of a pixel in the defect-score image being 0 indicates that a pixel in the first image collocated with the pixel in the defect-score image is the same as a pixel in the second image collocated with the same pixel in the defect-score image. The value of a pixel in the defect-score image being 1 indicates that the value of the collocated pixel in the first image is quite different (difference reaches a threshold) from the value of the collocated pixel in the second image.

Operation 243: Up-sample the defect-score image to obtain a defect-distribution image.

The defect-distribution image indicates defect distribution (i.e., distribution of the defect(s), if there is any) on the first object.

In all embodiments of the present disclosure, after the defect-score image is up-sampled after being obtained, where a quantity of the dimensions to which the up-sampling is applied is selected, to obtain the defect-distribution image. The up-sampling may be represented by the following equation.

$$\mathcal{S} = \sum_{n \in N} \sigma_n \mathcal{M}^n(x_0, \widehat{x_0}) \qquad \text{Equation (2)}$$

$\sigma_n$ represents an up-sampling rate, and *N* represents the quantity of the selected dimensions.

Operation 244: Perform average pooling on the defect-distribution image to obtain a category of the defect on the first object.

As an example, after the defect-distribution image is obtained, global average pooling is performed on the defect-distribution image, and a maximum value obtained through the pooling serves an indicator of the category.

Operation 245: Determine the defect-distribution image and the category to serve as the defect-detection result.

Finally, the defect-distribution image and the category serve as the defect-detection result.

In all embodiments of the present disclosure, a defect score between the first image and the second image in each of the RGB channels may be further calculated. The defect scores, the defect-distribution image, and the category are combined to serve as the defect-detection result, i.e., as the determined defection condition.

Herein after the first noise is added to the first image to obtain the noisy image, the semantic feature describing the first object in the first image is extracted from the first image. Accordingly, the noisy image is denoised according to the semantic feature to obtain a second image, and the defect-detection result of the first image is determined according to similarity between the first image and the second image. In other words, the first image is analyzed at a semantic level to obtain the semantic feature, and the semantic feature is utilized to guide the image denoising. The result of the semantic analysis reflects information of the first object in the first image, and hence the first object in the noisy image can be clearly indicated during the image denoising to avoid that a part of the first object is removed as noise. That is, the complete first object can be retained as much as possible in the second image during the denoising. Therefore, when the images are compared to obtain the similarity, the only cause of low similarity is the defect on the first object in the first image, rather than a display error of the first object in the second image due to the denoising. Accuracy and efficiency of recognizing the defects on the first object are thus improved.

Herein performing the feature encoding processing and the feature decoding processing on the first image can make an output result include state information of the first object in the first image, thereby improving accuracy of the semantic analysis.

Herein after performing the feature fusion on at least two semantic feature maps, performing the feature decoding processing on the at least two semantic feature maps can improve information richness of finally obtained semantic feature.

Herein the two semantic feature maps are layered, and performing the feature fusion through the convolution can improve decoding accuracy of the semantic feature decoded data.

Herein performing the iterative feature encoding processing on the noisy image, and performing, with reference to the semantic feature, the iterative feature decoding processing on the denoising feature map to obtain the second image can improve consistency between the second image and the first image.

Herein after the feature fusion is performed on the denoising feature map(s) and the down-sampled image, the feature encoding processing is performed on the denoising feature map(s) and the down-sampled image to improve the accuracy of the semantic analysis.

In all embodiments of the present disclosure, the foregoing process of image processing may be implemented on a basis of deep learning. For example, reference is made to FIG. 5, which is a flowchart of a method for image processing according to an embodiment of the present disclosure. As shown in FIG. 5, the method includes the following operations.

Operation 2201: Input the first image into a trained semantic analysis model to obtain the semantic feature.

For example, the semantic analysis model includes an encoder and a decoder, respectively applied to performing the foregoing feature encoding processing and feature decoding processing to obtain the semantic feature.

The semantic analysis model may comprise a chain of semantic encoding modules sequentially arranged, a first semantic analysis model, and a semantic decoding module. The second denoising feature map is input into the 1st semantic encoding module to obtain the 1st semantic feature map, and the 1st semantic feature map is input into the 2nd semantic encoding module to obtain the 2nd semantic feature map. Similarly, the iterative feature encoding processing is performed to finally obtain the multiple semantic feature maps.

The 4th semantic feature map is input into the trained first semantic segmentation model to obtain the first semantic-segmentation feature map.

The first fused representation is obtained by performing feature fusion on at least two semantic feature maps and is input into a decoding module to obtain the semantic feature.

The semantic decoding module may be a semantic guided encoding block (SGEB), and its network structure includes three layers of ResnetBlocks.

In all embodiments of the present disclosure, apart from the direct result of the decoding, the semantic feature maps may also be included into the semantic feature to serve as the reference for the denoising process.

Operation 2301: Input the semantic feature and the noisy image into a trained image denoising model to obtain the second image.

For example, the image denoising model comprises a chain of denoising encoding modules and a chain of denoising decoding modules, which are applied to performing the foregoing denoising feature encoding processing and the foregoing denoising feature decoding processing to obtain the second image.

The noisy image or the representation of the noisy image is input into the 1st denoising encoding module to obtain the 1st denoising feature map, and the 1st denoising feature map is input into the 2nd denoising encoding module to obtain the 2nd denoising feature map. Similarly, the iterative feature encoding processing is performed to finally obtain the last denoising feature map.

The last denoising feature map, the last (e.g., the 4th) semantic feature map, and the semantic feature are input into the 1st denoising decoding module to obtain the 1st decoding result. The 1st decoding result is input into the 2nd denoising decoding module to obtain the 2nd decoding result, and similarly the iterative feature decoding processing is performed to obtain second noise. Data denoising processing is performed using the second noise to finally obtain the second image. The second noise may be obtained through the following equation.

$$\mathcal{G} = \mathcal{D}_{SD}\left(\mathcal{M}_{SD}\left(\mathcal{E}_{SD}(z_t)\right) + \mathcal{M}_{SG}\left(\mathcal{E}_{SD}\left(z + \mathcal{C}(x_0)\right)\right)\right) + \mathcal{D}_{SGj}\left(\mathcal{M}_{SG}\left(\mathcal{E}_{SD}\left(z + \mathcal{C}(x_0)\right)\right)\right)$$

Equation (3)

$\mathcal{D}_{SD}$ represents a decoding module of the image denoising model, $\mathcal{M}_{SD}$ represents a denoising-data storage module of the image denoising model, $\mathcal{E}_{SD}$ represents an encoding module in the image denoising model, $\mathcal{M}_{SG}$ represents a semantic-data storage module in the semantic analysis model, $\mathcal{C}(\cdot)$ represents a convolution neural network layer, and $\mathcal{D}_{SGj}$ represents a decoding module of the semantic analysis model.

The semantic encoding module may be a semantic guided decoder block (SGDB) also including the three layers of ResnetBlocks. The denoising decoding module includes a layer of ResnetBlock, a layer of Spatial Transformer, another layer of ResnetBlock, and an up-sample layer. A three-layer output result (e.g., the 4th semantic feature map) of the 4th semantic encoding module and another three-layer output result (another semantic feature map) of another semantic decoding module may be fused and fed into corresponding ResnetBlock of the 1st denoising decoding module, and the last (e.g., 4th) denoising feature map is input into the 1st denoised decoding module, such that denoising decoding processing is performed to obtain the 1st decoding result.

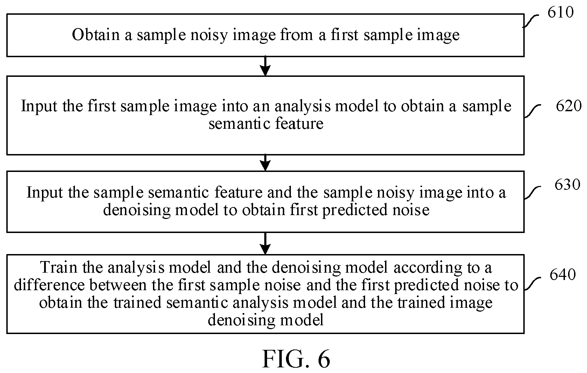

The following describes a training process of the semantic analysis model and the image denoising model. Refence is made to FIG. 6, which is a flowchart of a training process according to an embodiment of the present disclosure. As shown in FIG. 6, the method may include the following operations.

Operation 610: Obtain a sample noisy image from a first sample image.

The sample noisy image is a result of adding first sample noise into the first sample image.

For example, the first sample image is obtained and input into a trained encoder to obtain a hidden variable representation of the first sample image. The first sample noise is added to the hidden variable representation randomly to obtain the sample noisy image.

For example, the first sample image is a sample image of the first object having no defect.

Operation 620: Input the first sample image into an analysis model to obtain a sample semantic feature.

The first sample image is input into the analysis model to perform the (iterative) feature encoding processing, the decoding processing, and the feature fusion, to obtain the semantic feature.

Operation 630: Input the sample semantic feature and the sample noisy image into a denoising model to obtain first predicted noise.

When the noisy image is input into the denoising model for image denoising processing, the semantic feature is also input into the denoising model to obtain the first predicted noise.

Operation 640: Train the analysis model and the denoising model according to a difference between the first sample noise and the first predicted noise to obtain the trained semantic analysis model and the trained image denoising model.

The analysis model and the denoising model may be training using a L2 loss between the first sample noise and the first predicted noise to obtain the trained semantic analysis model and the trained image denoising model.

Hence, in the method provided herein, after the first noise is added to the first image to obtain the noisy image, the semantic feature describing the first object in the first image is extracted from the first image. Accordingly, the noisy image is denoised according to the semantic feature to obtain a second image, and the defect-detection result of the first image is determined according to similarity between the first image and the second image. In other words, the first image is analyzed at a semantic level to obtain the semantic feature, and the semantic feature is utilized to guide the image denoising. The result of the semantic analysis reflects information of the first object in the first image, and hence the first object in the noisy image can be clearly indicated during the image denoising to avoid that a part of the first object is removed as noise. That is, the complete first object can be retained as much as possible in the second image during the denoising. Therefore, when the images are compared to obtain the similarity, the only cause of low similarity is the defect on the first object in the first image, rather than a display error of the first object in the second image due to the denoising. Accuracy and efficiency of recognizing the defects on the first object are thus improved.

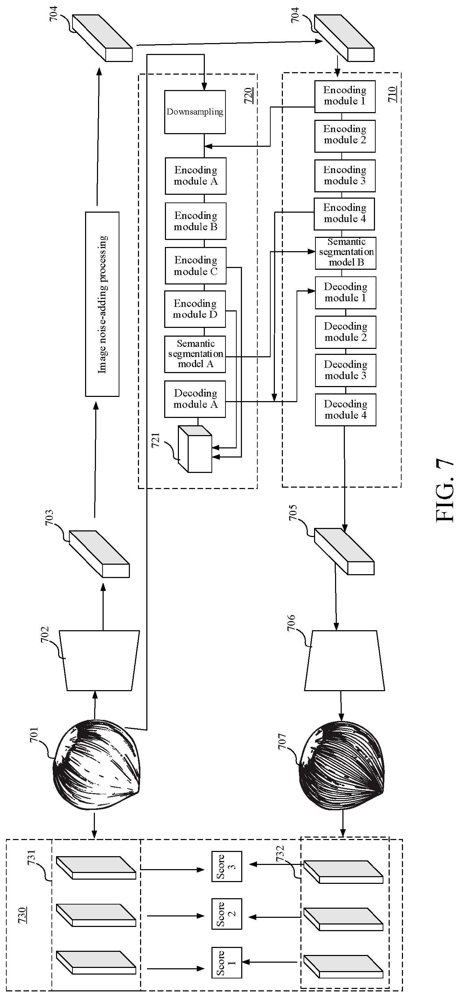

Refer to FIG. 7 for an example. FIG. 7 is a schematic diagram of a method for image processing according to an embodiment of the present disclosure. As shown in FIG. 7, the method includes the following operations.

The first image 701 is obtained and input into an encoder 702 to obtain the hidden variable representation 703. The mage noise-adding processing is performed on the hidden variable representation 703 to obtain a representation of the noisy image 704 (herein the representation of the noisy image is also called the noisy image for brevity).

The noisy image 704 is input into the image denoising model 710 for the image denoising processing. Meanwhile, the first image 701 is input into the semantic analysis model 720 for semantic analysis.

In the semantic analysis process, down-sampling is performed on the first image 701 to obtain the down-sampled image. In the image denoising, the $1^{st}$ denoising feature map is obtained by encoding module 1 in the encoder of the image denoising model 710 through the feature encoding processing, and the down-sampled image are input into encoding module A in the semantic analysis model 720 for the semantic encoding processing. The output of encoding module A passes through encoding module B, encoding module C, and encoding module D. The semantic feature maps respectively output by encoding module C and encoding module D are input into the feature fusion module 721 for feature fusion to obtain the first fused representation. The first fused representation is input into decoding module A to obtain the semantic feature. In addition, the $4^{th}$ semantic feature map be output by encoding module D is input into semantic segmentation model A to obtain the first semantic-segmentation feature map.

Encoding module A, encoding module B, the encoding module C, and encoding module D are implemented as four semantic guided encoder modules (SGEBs). Therefore, encoding module A corresponds to SGEB1, encoding module B corresponds to SGEB2, encoding module c corresponds to SGEB3, and encoding module d corresponds to SGEB4. A network structure inside the SGEB includes the layer of ResnetBlock, the layer of Spatial Transformer, the other layer of ResnetBlock, and the down-sample layer.

Semantic segmentation model A is implemented as an SGM model.

Decoding module A is implemented as the semantic guided decoder block (SGDB).

In the image denoising, the iterative feature encoding processing is performed by encoding module 1, encoding module 2, encoding module 3, and encoding module 4. The $4^{th}$ denoising feature map obtained by the encoding module 4 is input into semantic segmentation model B to obtain the second semantic-segmentation feature map. The feature fusion is performed on the first semantic-segmentation feature map and the second semantic-segmentation feature map, and the $4^{th}$ denoising feature map is input into decoding module 1 for decoding with reference to the fused result to obtain the first denoising feature map. The $1^{st}$ decoding result and the semantic feature are jointly input into decoding module 2 for decoding, and the result sequentially passes through decoding module 3 and decoding module 4 to obtain second noise.

Encoding module 1, encoding module 2, encoding module 3, and encoding module 4 are implemented as four stable diffusion encoder blocks (SDEB). Therefore, encoding module 1 corresponds to SDEB1, encoding module 2 corresponds to SDEB2, encoding module 3 corresponds to SDEB3, and encoding module 4 corresponds to SDEB4.

Decoding module 1, decoding module 2, decoding module 3, and decoding module 4 are implemented as four stable diffusion decoder blocks (SDDB). Therefore, decoding module 1 corresponds to SDDB1, decoding module 2 corresponds to SDDB2, decoding module 3 corresponds to SDDB3, and decoding module 4 corresponds to SDDB4.

The data denoising processing is performed on the second noise to obtain the denoised representation 705. The denoised representation 705 is input into a decoder 706 to obtain the second image 707. The first image 701 and the second image 707 are input into a feature-space model 730 to extract the first representation 731 and the second representation 732. Finally, the defect condition is obtained according to the cosine similarity between the first representation 731 and the second representation 732.

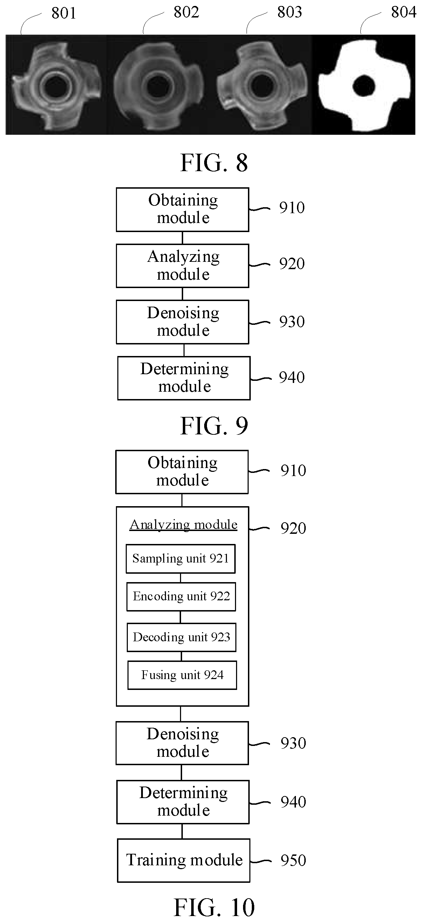

Reference is made to FIG. 8 for an example. FIG. 8 is a diagram of processing effects of the method provided herein and a method in related art. As shown in FIG. 8, the first image 801 is the input image on which the defect is to be detected. After the image noise-adding processing, the image 802 is an image obtained through denoising processing using technology in related art, while the image 803 is an image obtained through denoising processing according to an embodiment of the present disclosure. The image 804 is a contour image for reference. FIG. 8 shows that accuracy of an image processing result of the image processing solution of the present disclosure is higher than accuracy corresponding to an image obtained through processing in related art.

Hence, in the method provided herein, after the first noise is added to the first image to obtain the noisy image, the semantic feature describing the first object in the first image is extracted from the first image. Accordingly, the noisy image is denoised according to the semantic feature to obtain a second image, and the defect-detection result of the first image is determined according to similarity between the first image and the second image. In other words, the first image is analyzed at a semantic level to obtain the semantic feature, and the semantic feature is utilized to guide the image denoising. The result of the semantic analysis reflects information of the first object in the first image, and hence the first object in the noisy image can be clearly indicated during the image denoising to avoid that a part of the first object is removed as noise. That is, the complete first object can be retained as much as possible in the second image during the denoising. Therefore, when the images are compared to obtain the similarity, the only cause of low similarity is the defect on the first object in the first image, rather than a display error of the first object in the second image due to the denoising. Accuracy and efficiency of recognizing the defects on the first object are thus improved.

This technical solution provides multi-type defect detection method based on a diffusion model framework, improves an existing diffusion model denoising network framework, adds a semantic guiding network, addresses a categorization error and a semantic error occurring when the existing diffusion model deals with a multi-type defect detection task, reconstructs a large-area defect area while maintaining consistency of semantic information of an input image and semantic information of a reconstructed image, and can effectively reconstruct defects of different types to become normal samples. In addition, by extracting the input image and the reconstructed image through a feature extraction network, defects can be effectively detected and located, and this multi-type-defect detection method can deal with detection and location of multi-type defects in actual industrial scenarios.

FIG. 9 is a structural block diagram of an apparatus for image processing according to an embodiment of the present disclosure. As shown in FIG. 9, the apparatus includes an obtaining module 910, an analyzing module 920, a denoising module 930, and a determining module 940.

The obtaining module 910 is configured for adding first noise into a first image to obtain a noisy image, wherein the first image displays a first object.

The analyzing module 920 is configured for extracting, from the first image, a semantic feature describing the first object.

The denoising module 930 is configured for denoising the noisy image according to the semantic feature to obtain a second image.

The determining module 940 is configured for determining a defect-detection result of the first image according to similarity between the first image and the second image, where the defect-detection result indicates whether the first object has a defect or characterizes the defect on the first object.

In all embodiments of the present disclosure, as shown in FIG. 10, the analyzing module 920 may comprise a sampling unit 921, an encoding unit 922, and a decoding unit 923.

The sampling unit 921 is configured for down-sampling the first image to obtain a down-sampled image.

The encoding unit 922 is configured for encoding the down-sampled image through a chain of first encoding modules to obtain semantic feature maps of a first quantity, where respective dimensions of the semantic feature maps are different from each other, and for each positive integer i smaller than the first quantity, an $i^{th}$ semantic feature map is encoded through a respective one of the first encoding modules to obtain an $(i+1)^{th}$ semantic feature map.

The decoding unit 923 is configured for decoding at least one of the semantic feature maps to obtain the semantic feature.

In all embodiments of the present disclosure, the analyzing module 920 may further comprise a fusing unit 924.

The fusion unit 924 is configured for fusing at least two of the semantic feature maps to obtain a first fused representation.

The decoding unit 923 is configured for decoding the first fused representation to obtain the semantic feature.

In all embodiments of the present disclosure, the at least two of the semantic feature maps may comprise an $n^{th}$ semantic feature map and an $m^{th}$ semantic feature map, the $n^{th}$ semantic feature map comprises k first semantic layers, the $m^{th}$ semantic feature map comprises k second semantic layers, and n, m, and k are positive integers.

The fusion unit 924 is configured for: performing convolution on the k second semantic layers to obtain k convolution results, respectively; fusing the k convolution results and each first semantic layer of the k first semantic layers to obtain a respective layer of the first fused representation; and combining the k layers of the first fused representation to obtain the first fused representation.

In all embodiments of the present disclosure, the denoising module 930 may be further configured for: encoding the noisy image through a chain of second encoding modules to obtain denoising feature maps; and decoding, with reference to the semantic feature and the semantic feature maps, a first denoising feature map of the denoising feature maps through a chain of decoding modules to obtain the second image.

In all embodiments of the present disclosure, the analyzing module 920 may be further configured for fusing a second denoising feature map of the denoising feature maps and the down-sampled image to obtain a second fused representation, where in the chain of second encoding modules, the second encoding module outputting the first denoising feature map is located downstream the second encoding module outputting the second denoising feature map; and encoding the second fused representation through the chain of first encoding modules to obtain the semantic feature maps of the first quantity.

In all embodiments of the present disclosure, the denoising module 930 may be further configured for: decoding, with reference to the semantic feature and the semantic feature maps, the first denoising feature map of the denoising feature maps through the chain of decoding modules to obtain second noise indicating a prediction of the first noise;

removing the second noise from a representation of the noisy image to obtain a denoised representation; and decoding the denoised representation to obtain the second image.

In all embodiments of the present disclosure, the denoising module 930 may be further configured for: performing semantic segmentation on a first semantic feature map of the semantic feature maps to obtain a first semantic-segmentation feature map, where the first semantic-segmentation feature map indicates categories of pixels in the first image; performing the semantic segmentation on the first denoising feature map to obtain a second semantic-segmentation feature map, where the second semantic-segmentation feature map indicates categories of pixels in the noisy image; concatenating the first semantic-segmentation feature map and the second semantic-segmentation feature map to obtain a concatenated feature; and decoding, with reference to the semantic feature and the concatenated feature, the first denoising feature map through the chain of decoding modules to obtain the second noise.

In all embodiments of the present disclosure, the defect-detection result may indicate a position of the defect and a category of the defect.

The determining module 940 may be further configured for: extracting, from the first image, a first representation of the first image; extracting, from the second image, a second representation of the second image; calculating a cosine similarity between the first representation and the second representation to obtain a defect-score image, where the defect-score image indicates a difference between the first image and the second image in pixel value; up-sampling the defect-score image to obtain a defect-distribution image, where the defect-distribution image indicates defect distribution on the first object; performing average pooling on the defect-distribution image to obtain a category of the defect on the first object; and determining the defect-distribution image and the category to serve as the defect-detection result.

In all embodiments of the present disclosure, the analyzing module 920 may be configured for inputting the first image into a trained semantic analysis model to obtain the semantic feature, the denoising module 930 may be configured for inputting the semantic feature and the noisy image into a trained image denoising model to obtain the second image.

In all embodiments of the present disclosure, the apparatus may further comprise a training module 950.

The training model 950 is configured for: obtaining a sample noisy image, where the sample noisy image is a result of adding first sample noise into a first sample image; inputting the first sample image into an analysis model to obtain a sample semantic feature; inputting the sample semantic feature and the sample noisy image into a denoising model to obtain first predicted noise; and training the analysis model and the denoising model according to a difference between the first sample noise and the first predicted noise to obtain the trained semantic analysis model and the trained image denoising model.

During operation of the apparatus provided herein, after the first noise is added to the first image to obtain the noisy image, the semantic feature describing the first object in the first image is extracted from the first image. Accordingly, the noisy image is denoised according to the semantic feature to obtain a second image, and the defect-detection result of the first image is determined according to similarity between the first image and the second image. In other words, the first image is analyzed at a semantic level to obtain the semantic feature, and the semantic feature is utilized to guide the image denoising. The result of the semantic analysis reflects information of the first object in the first image, and hence the first object in the noisy image can be clearly indicated during the image denoising to avoid that a part of the first object is removed as noise. That is, the complete first object can be retained as much as possible in the second image during the denoising. Therefore, when the images are compared to obtain the similarity, the only cause of low similarity is the defect on the first object in the first image, rather than a display error of the first object in the second image due to the denoising. Accuracy and efficiency of recognizing the defects on the first object are thus improved.

The apparatus for image processing provided by the foregoing embodiments is illustrated by using an example of division into the foregoing functional modules. In a practical application, the foregoing functions may be allocated to and completed by different functional modules according to a requirement, that is, an internal structure of the device is divided into different functional modules, to complete all or some of the foregoing described functions. In addition, the apparatus for image processing and the method for image processing provided in the foregoing embodiments belong to the same concept. For a specific implementation process, refer to the method embodiment, and the details are not described herein again.

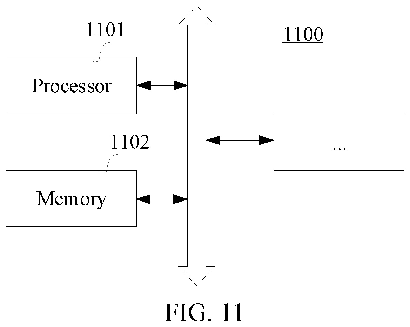

FIG. 11 is a structural block diagram of a computer device 1100 according to an embodiment of the present disclosure. The computer device 1100 may be a portable mobile terminal, such as a smartphone, a tablet computer, a moving picture experts group audio layer III (MP3) player, a moving picture experts group audio layer IV (MP4) player, a notebook computer, or a desktop computer. The computer device 1100 may alternatively be referred to as a user equipment, a portable terminal, a laptop terminal, a desktop terminal, or the like.

Generally, the computer device 1100 includes a processor 1101 and a memory 1102.

The processor 1101 may include one or more processing cores. For example, the processor 1101 may be a four-core processor or an eight-core processor. The processor 1101 may be implemented by using at least one hardware form of a digital signal processor (DSP), a field-programmable gate array (FPGA), or a programmable logic array (PLC). The processor 1101 may further include a main processor and a co-processor. The main processor is a processor configured to process data in a wakeup state and is also referred to as a central processing unit (CPU); and the co-processor is a low-power processor configured to process data in a standby state. In all embodiments of the present disclosure, the processor 1101 may be integrated with a graphics processing unit (GPU), and the GPU is configured to be responsible for rendering and drawing content that needs to be displayed on a display screen. In all embodiments of the present disclosure, the processor 1101 may further include an artificial intelligence (AI) processor. The AI processor is configured to process a calculation operation related to machine learning.

The memory 1102 may include one or more computer-readable storage media, and the computer readable storage media may be non-transitory. In addition, the memory 1102 may further include a high-speed random access memory and may further include a non-volatile memory such as one or more magnetic disk storage devices and flash storage devices. In all embodiments of the present disclosure, the non-transitory computer-readable storage medium in the memory 1102 is configured to store at least one instruction. The at least one instruction is executed by the processor 1101 to implement a classification model training method and data classification method provided in the method embodiments of the present disclosure.

In all embodiments of the present disclosure, the computer device 1100 may further include other components. A person skilled in the art may understand that a structure shown in FIG. 11 does not constitute a limitation to the computer device 1100, and the computer device 1100 may include more components or fewer components than the components shown in the figure, or some components may be combined, or a different component deployment may be applied.

In addition, an embodiment of the present disclosure provides a storage medium, the storage medium being configured to have a computer program stored therein, and the computer program being configured to execute the method according to the foregoing embodiments.

An embodiment of the present disclosure further provides a computer program product including the computer program, the computer program product, when running on a computer, making the computer perform the method according to the foregoing embodiments.

A person of ordinary skill in the art may understand that all or some of the operations of the methods in the foregoing embodiments may be implemented by the program instructing relevant hardware. The program may be stored in a computer-readable storage medium. The computer-readable storage medium may be a computer-readable storage medium included in the memory provided in the foregoing embodiments; or the computer-readable storage medium may exist independently, as a computer-readable storage medium not assembled into a terminal. The computer-readable storage medium stores at least one instruction, at least one program, and a code set or an instruction set, and the at least one instruction, the at least one program, and the code set or the instruction set are loaded and executed by the processor to implement the method according to any one of the foregoing embodiments.

In all embodiments of the present disclosure, the computer-readable storage medium may include: a read-only memory (ROM), a random-access memory (RAM), a solid-state drive (SSD), or an optical disc, and the like. The random-access memory may include a resistance random access memory (ReRAM) and a dynamic random-access memory (DRAM). The sequence numbers of the foregoing embodiments of the present disclosure are merely for a description purpose and do not indicate superiority or inferiority of the embodiments.

The person of ordinary skill in the art may understand that all or some of the operations in the foregoing embodiments may be implemented by using hardware or may be implemented by the program instructing the relevant hardware. The program may be stored in the computer-readable storage medium. The foregoing described storage medium may be a read-only memory, a magnetic disk, the optical disc, or the like.

The foregoing descriptions are merely embodiments of the present disclosure and are not intended to limit the present disclosure.

**Claims**

1. A method for image processing, executable by a computer device, the method comprising:

   adding first noise into a first image to obtain a noisy image, wherein the first image displays a first object;
   extracting, from the first image, a semantic feature describing the first object;
   denoising the noisy image according to the semantic feature to obtain a second image; and
   determining a defect-detection result of the first image according to similarity between the first image and the second image, wherein the defect-detection result indicates whether the first object has a defect or characterizes the defect on the first object.

2. The method according to claim 1, wherein extracting, from the first image, the semantic feature describing the first object comprises:

   down-sampling the first image to obtain a down-sampled image;

encoding the down-sampled image through a chain of first encoding modules to obtain semantic feature maps of a first quantity, wherein respective dimensions of the semantic feature maps are different from each other, and for each positive integer i smaller than the first quantity, an $i^{th}$ semantic feature map is encoded through a respective one of the first encoding modules to obtain an $(i+1)^{th}$ semantic feature map; and

decoding at least one of the semantic feature maps to obtain the semantic feature.

3. The method according to claim 2, wherein decoding the at least one of the semantic feature maps to obtain the semantic feature comprises:

fusing at least two of the semantic feature maps to obtain a first fused representation; and
decoding the first fused representation to obtain the semantic feature.

4. The method according to claim 3, wherein:

the at least two of the semantic feature maps comprise an $n^{th}$ semantic feature map and an $m^{th}$ semantic feature map, the $n^{th}$ semantic feature map comprises k first semantic layers, the $m^{th}$ semantic feature map comprises k second semantic layers, and n, m, and k are positive integers; and
fusing the at least two of the semantic feature maps to obtain the first fused representation comprises:

performing convolution on the k second semantic layers to obtain k convolution results, respectively;
fusing the k convolution results and each first semantic layer of the k first semantic layers to obtain a respective layer of the first fused representation; and
combining the k layers of the first fused representation to obtain the first fused representation.

5. The method according to claim 2, wherein denoising the noisy image according to the semantic feature to obtain the second image comprises:

encoding the noisy image through a chain of second encoding modules to obtain denoising feature maps; and
decoding, with reference to the semantic feature and the semantic feature maps, a first denoising feature map of the denoising feature maps through a chain of decoding modules to obtain the second image.

6. The method according to claim 5, wherein encoding the down-sampled image through the chain of first encoding modules to obtain the semantic feature maps of the first quantity comprises:

fusing a second denoising feature map of the denoising feature maps and the down-sampled image to obtain a second fused representation, wherein in the chain of second encoding modules, the second encoding module outputting the first denoising feature map is located downstream the second encoding module outputting the second denoising feature map; and
encoding the second fused representation through the chain of first encoding modules to obtain the semantic feature maps of the first quantity.

7. The method according to claim 5, wherein decoding, with reference to the semantic feature and the semantic feature maps, the first denoising feature map of the denoising feature maps through the chain of decoding modules to obtain the second image comprises:

decoding, with reference to the semantic feature and the semantic feature maps, the first denoising feature map of the denoising feature maps through the chain of decoding modules to obtain second noise indicating a prediction of the first noise;
removing the second noise from a representation of the noisy image to obtain a denoised representation; and
decoding the denoised representation to obtain the second image.

8. The method according to claim 7, wherein before decoding the at least one of the semantic feature maps to obtain the semantic feature, the method further comprises:

performing semantic segmentation on a first semantic feature map of the semantic feature maps to obtain a first semantic-segmentation feature map, wherein the first semantic-segmentation feature map indicates categories of pixels in the first image; and
decoding, with reference to the semantic feature and the semantic feature maps, the first denoising feature map of the denoising feature maps through the chain of decoding modules to obtain the second noise comprises:

performing the semantic segmentation on the first denoising feature map to obtain a second semantic-segmentation feature map, wherein the second semantic-segmentation feature map indicates categories of pixels in the noisy image;

concatenating the first semantic-segmentation feature map and the second semantic-segmentation feature map to obtain a concatenated feature; and

decoding, with reference to the semantic feature and the concatenated feature, the first denoising feature map through the chain of decoding modules to obtain the second noise.

9. The method according to any one of claims 1 to 8, wherein determining the defect-detection result of the first image according to the similarity between the first image and the second image comprises:

extracting, from the first image, a first representation of the first image;

extracting, from the second image, a second representation of the second image;

calculating a cosine similarity between the first representation and the second representation to obtain a defect-score image, wherein the defect-score image indicates a difference between the first image and the second image in pixel value;

up-sampling the defect-score image to obtain a defect-distribution image, wherein the defect-distribution image indicates defect distribution on the first object;

performing average pooling on the defect-distribution image to obtain a category of the defect on the first object; and

determining the defect-distribution image and the category to serve as the defect-detection result.

10. The method according to any one of claims 1 to 8, wherein:

extracting, from the first image, the semantic feature describing the first object comprises:

inputting the first image into a trained semantic analysis model to obtain the semantic feature; and

denoising the noisy image according to the semantic feature to obtain the second image comprising:

inputting the semantic feature and the noisy image into a trained image denoising model to obtain the second image.

11. The method according to claim 10, wherein before inputting the first image into the trained semantic analysis model to obtain the semantic feature, the method further comprises:

obtaining a sample noisy image, wherein the sample noisy image is a result of adding first sample noise into a first sample image;

inputting the first sample image into an analysis model to obtain a sample semantic feature;

inputting the sample semantic feature and the sample noisy image into a denoising model to obtain first predicted noise; and

training the analysis model and the denoising model according to a difference between the first sample noise and the first predicted noise to obtain the trained semantic analysis model and the trained image denoising model.

12. An apparatus for image processing, comprising:

an obtaining module, configured for adding first noise into a first image to obtain a noisy image, wherein the first image displays a first object;

an analyzing module, configured for extracting, from the first image, a semantic feature describing the first object;

a denoising module, configured for denoising the noisy image according to the semantic feature to obtain a second image; and

a determining module, configured for determining a defect-detection result of the first image according to similarity between the first image and the second image, wherein the defect-detection result indicates whether the first object has a defect or characterizes the defect on the first object.

13. A computer device, comprising a processor and a memory, wherein the memory stores a computer program, and the computer program when loaded and executed by the processor implements the method according to any one of claims 1 to 11.

14. A computer-readable storage medium, storing a computer program, wherein the computer program when loaded and executed by a processor implements the method according to any one of claims 1 to 11.

15. A computer program product, comprising a computer program, wherein the computer program when executed by a processor implements the method according to any one of claims 1 to 11.

FIG. 1

| Obtain a noisy image of a first image | 210 |
| Extract a semantic feature from the first image | 220 |
| Denoise the noisy image according to the semantic feature to obtain a second image | 230 |
| Determine a defect-detection result of the first image according to similarity between the first image and the second image | 240 |

FIG. 2

Obtain a noisy image of a first image ⟋ 210

Down-sample the first image to obtain a down-sampled image ⟋ 221

Encode the down-sampled image through a chain of first encoding modules to obtain semantic feature maps of a first quantity ⟋ 222

Decode at least one of the semantic feature maps to obtain the semantic feature ⟋ 223

Encode the noisy image through a chain of second encoding modules to obtain denoising feature maps ⟋ 231

Decode, with reference to the semantic feature and the semantic feature maps, a first denoising feature map of the denoising feature maps through a chain of decoding modules to obtain the second image ⟋ 232

Extract, from the first image, a first representation of the first image and extract, from the second image, a second representation of the second image ⟋ 241

Calculate a cosine similarity between the first representation and the second representation to obtain a defect-score image ⟋ 242

Up-sample the defect-score image to obtain a defect-distribution image ⟋ 243

Perform average pooling on the defect-distribution image to obtain a category of the defect on the first object ⟋ 244

Determine the defect-distribution image and the category to serve as the defect-detection result ⟋ 245

FIG. 3

FIG. 4

| | |
|---|---|
| Obtain a noisy image of a first image | 210 |
| Input the first image into a trained semantic analysis model to obtain the semantic feature | 2201 |
| Input the semantic feature and the noisy image into a trained image denoising model to obtain the second image | 2301 |
| Determine a defect-detection result of the first image according to similarity between the first image and the second image | 240 |

FIG. 5

Obtain a sample noisy image from a first sample image ⌐ 610

Input the first sample image into an analysis model to obtain a sample semantic feature ⌐ 620

Input the sample semantic feature and the sample noisy image into a denoising model to obtain first predicted noise ⌐ 630

Train the analysis model and the denoising model according to a difference between the first sample noise and the first predicted noise to obtain the trained semantic analysis model and the trained image denoising model ⌐ 640

FIG. 6

EP 4 773 075 A1

FIG. 7

801   802   803   804

FIG. 8

```
┌─────────────┐
│  Obtaining  │─── 910
│   module    │
└─────────────┘
       │
┌─────────────┐
│  Analyzing  │─── 920
│   module    │
└─────────────┘
       │
┌─────────────┐
│  Denoising  │─── 930
│   module    │
└─────────────┘
       │
┌─────────────┐
│ Determining │─── 940
│   module    │
└─────────────┘
```

FIG. 9

```
┌──────────────────────┐
│     Obtaining        │─── 910
│      module          │
└──────────────────────┘
           │
┌──────────────────────┐
│  Analyzing module    │─── 920
│  ┌────────────────┐  │
│  │Sampling unit 921│ │
│  └────────────────┘  │
│  ┌────────────────┐  │
│  │Encoding unit 922│ │
│  └────────────────┘  │
│  ┌────────────────┐  │
│  │Decoding unit 923│ │
│  └────────────────┘  │
│  ┌────────────────┐  │
│  │ Fusing unit 924 │ │
│  └────────────────┘  │
└──────────────────────┘
           │
┌──────────────────────┐
│     Denoising        │─── 930
│      module          │
└──────────────────────┘
           │
┌──────────────────────┐
│    Determining       │─── 940
│      module          │
└──────────────────────┘
           │
┌──────────────────────┐
│   Training module    │─── 950
└──────────────────────┘
```

FIG. 10

1101

Processor

1100

1102

Memory

...

FIG. 11

## INTERNATIONAL SEARCH REPORT

| International application No. |
|---|
| **PCT/CN2024/123313** |

**A. CLASSIFICATION OF SUBJECT MATTER**

G06T7/00(2017.01)i

According to International Patent Classification (IPC) or to both national classification and IPC

**B. FIELDS SEARCHED**

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

VEN, USTXT, EPTXT, WOTXT, CNTXT, CNKI: 图像, 噪声, 去噪, 语义, 缺陷, 分类, 识别, 编码, 特征, image, noise, denoising, semantic, bug, sort, identify, encode, feature

**C. DOCUMENTS CONSIDERED TO BE RELEVANT**

| Category* | Citation of document, with indication, where appropriate, of the relevant passages | Relevant to claim No. |
|---|---|---|
| PX | CN 117710295 A (TENCENT TECHNOLOGY (SHENZHEN) CO., LTD.) 15 March 2024 (2024-03-15) <br> claims 1-15 | 1-15 |
| A | CN 117058276 A (TENCENT TECHNOLOGY (SHENZHEN) CO., LTD.) 14 November 2023 (2023-11-14) <br> claims 1-6 | 1-15 |
| A | CN 112990215 A (TENCENT TECHNOLOGY (SHENZHEN) CO., LTD.) 18 June 2021 (2021-06-18) <br> entire document | 1-15 |
| A | US 2022207866 A1 (NEC CORP.) 30 June 2022 (2022-06-30) <br> entire document | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 November 2024** | **14 November 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/123313**

| Patent document cited in search report | | | Publication date (day/month/year) | Patent family member(s) | | | Publication date (day/month/year) |
|---|---|---|---|---|---|---|---|
| CN | 117710295 | A | 15 March 2024 | None | | | |
| CN | 117058276 | A | 14 November 2023 | None | | | |
| CN | 112990215 | A | 18 June 2021 | HK | 40050125 | A0 | 24 December 2021 |
| US | 2022207866 | A1 | 30 June 2022 | JP | 2022103149 | A | 07 July 2022 |
| | | | | CN | 114693694 | A | 01 July 2022 |

Form PCT/ISA/210 (patent family annex) (July 2022)

**EP 4 773 075 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023116316198